# EUROPEAN PATENT SPECIFICATION

(11) **EP 0 654 757 B1**
(45) Date of publication and mention of the grant of the patent: **02.02.2000**
(21) Application number: 94118030.9
(22) Date of filing: 15.11.1994
(51) Int. Cl.: G06K 15/00, G06F 3/12

(54) **A printing apparatus and a control method therefor**
Druckvorrichtung und Steuerungsverfahren dafür
Appareil d'impression et méthode pour son contrôle

(30) Priority: 16.11.1993 JP 28700293
(43) Date of publication of application: 24.05.1995
(73) Proprietor: SEIKO EPSON CORPORATION, Shinjuku-ku, Tokyo 163-0811 (JP)
(72) Inventor: Teradaira, Mitsuaki, Seiko Epson Corporation, Suwa-shi, Nagano-ken 392 (JP); Koakutsu, Naohiko, Seiko Epson Corporation, Suwa-shi, Nagano-ken 392 (JP); Hyonaga, Takuya, Seiko Epson Corporation, Suwa-shi, Nagano-ken 392 (JP)
(74) Representative: Hoffmann, Eckart, Dipl.-Ing.

(56) References cited:
- GB-A- 2 225 468
- US-A- 4 930 087
- US-A- 5 124 809

## Description

The present invention relates to a printing apparatus, and, more particularly, it relates to a printing apparatus suitable for systems, such as point-of-sale (POS) terminals and electronic cash registers (ECR), used in processing monetary transactions.

Conventional printing apparatuses include a status request command within the control command set, and send printing apparatus operating status information to a host computer in response the each status request command received from the host computer. The host computer sends the status request command as required to obtain the current status of the printing apparatus.

However, when the status of the printing apparatus changes between execution of one status request command and the execution of the next following status request command, the host computer is not immediately informed about such change, and so a time delay occurs corresponding to the time interval between the moment the status changes and the execution of the next following status request command. To reduce this time delay, the host computer frequently sends the status request command to the printing apparatus at a very short interval. This frequent sending of the status request command greatly increases the overhead on the host computer.

Thus, since a large volume of status data is sent from the printing apparatus irrespective of whether there is a change in the printing apparatus status, the efficiency of status data interpretation in the host computer is significantly reduced because status data having the same content is received and interpreted more than once consecutively. Finally, frequent execution of the status request command by the printing apparatus also reduces the throughput of the printing operation.

A printing apparatus according to the prior art portion of claim 1 is disclosed in US-A-5,124,809 and GB-A-2 225 468. In this prior art, a host system is connected to an image forming device and optional units are in turn connected to the image forming unit. The image forming device comprises a controller and a print engine. Operating states are sent from the print engine and optional units to the controller while the controller sends control commands to the print engine and the optional units. This prior art does not disclose any means that would allow the host system to know which operating state changed, if any.

The object of the present invention is to provide a printing apparatus, and a method of controlling it, that allow the host device to be informed if an operating state changed and to easily find out which operating state changed if any.

This object is achieved with a printing apparatus as claimed in claim 1 and a control method as claimed in claim 8, respectively.

Preferred embodiments of the invention are subject-matter of the dependent claims.

Normally, the status information comprises a plurality of status data representing individual operating states such as the on-line/off-line state, a paper detector state, an error/no error state etc.. These status data are assembled into one or more data blocks of a data format suitable for transmission to the host computer. Typically each operating state is represented by one bit and each block comprises 8 bits of which one or more bits may be unused. Therefore, a data block of status information representing one or more operating states will hereinafter be referred to as "status byte". The use of the term "status byte" is not intended to impose any restriction with respect to the data format and length that can be employed according to the present invention.

The present invention provides a highly reliable and efficient system by transmitting status information initially in response to a single automatic status selection and transmission command (referred to as ASB command in the following (ASB = Automatic Status Back)) and then each time and only when any of one or more operating states selected by the ASB command change. This enables the host computer to obtain the change in the status of the printing apparatus automatically and immediately. The host device can store the status information received initially in response to an ASB command. When then status information is again sent in reponse to a change of an operating state, the host can compare the new status information with the previously received one in order to easily identify each operating state that has changed.

In one embodiment of the invention the status information includes one status byte only. The ASB command selects one or more operating states represented by the status byte. Whenever a change in any one of the selected operating states occurs, the status byte will be sent to the host computer.

In another embodiment of the invention the status information includes plural status bytes. The ASB command selects one or more operating states represented by the status bytes. Whenever a change in any one of the selected operating states occurs, either all of the status bytes will be sent, or, more preferable, only those status bytes will be sent that include information about the one or more selected operating states. According to this latter alternative, by only sending the relevant status bytes the amount of data sent to and to be processed by the host computer can be reduced compared to the case where all of plural status bytes are always sent together. Thus, the overhead for status data interpretation is therefore also reduced and the efficiency of status data interpretation is improved because only the minimum required amount of status data is used.

The invention is described below with reference to the accompanying figures which illustrate one specific embodiment only and in which:
- Fig. 1: is an overview of a printing apparatus used to describe the preferred embodiment of the invention;
- Fig. 2: is a cross section of a printing apparatus used to describe the preferred embodiment of the invention;
- Fig. 3: is a a schematic view illustrating a printing unit of the printing apparatus according to a preferred embodiment of the invention;
- Fig. 4: is a circuit block diagram of the control circuit used to describe the preferred embodiment of the invention;
- Fig. 5: is a function block diagram used to describe the preferred embodiment of the invention;
- Fig. 6: illustrates a control command used in the present invention;
- Fig. 7: is a flow chart of the overall process of a printing apparatus control method according to a preferred embodiment of the invention;
- Fig. 8: is a flow chart of a subroutine in the printing apparatus control method according to a preferred embodiment of the invention; and
- Fig. 9: is a flow chart of a subroutine in the printing apparatus control method according to a preferred embodiment of the invention.

In general, recording paper used in the distribution industry is either cut-sheet or continuous forms paper. Cut-sheet paper includes irregularly sized, individual voucher forms called slip paper, and multiple-part individual voucher forms, called validation paper, of a relatively regular size. Continuous paper includes journal paper for printing and storing store records, and receipt paper used for simple receipts.

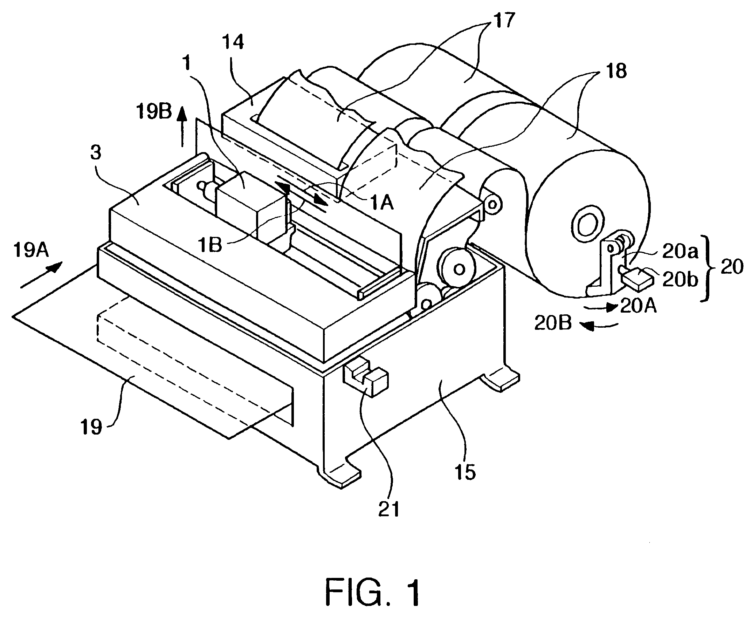

Fig. 1 is an overview of a printing apparatus capable of printing to slip-, journal-, and receipt-type recording paper.

As shown in Fig. 1, this printing apparatus comprises print head 1, which is typically a so-called "wire dot head" comprising plural wire pins arrayed in a vertical line; and ink ribbon 3. The print head 1 prints while being driven in a reciprocal motion as indicated by arrows 1A and 1B.

Receipt paper 17 and journal paper 18 are inserted from the back of the printer mechanism in roll form, and are fed out from the top as shown in the figure. Slip paper 19 is inserted from the front of the printer mechanism (arrow 19A), and similarly fed out from the top (arrow 19B).

Near-end detector 20 for detecting the end of the receipt and journal paper is also provided. Near-end detector 20 comprises a near-end detecting lever 20a, which is arranged to be pushed out in the direction of arrow 20A by the end face of the roll paper as long as the outside diameter of the end face is larger than a certain minimum value, and a push switch 20b, which is turned on/off by near-end detecting lever 20a. The outside diameter steadily decreases as the end of the roll paper approaches, and when the core of the roll paper is reached, near-end detecting lever 20a rotates in the direction of arrow 20B. This causes push switch 20b to switch OFF, thus detecting the near-end of the paper.

After printing is completed, receipt paper 17 is cut by cutter unit 14, and can be handed to the customer.

The printer mechanism is covered by a housing not shown in the figures; this housing comprises a cover that is not shown and lower case 15. Cover detector 21 is an opposed-type photodetector, so called photo-interrupter. When the cover is closed, the beam from cover detector 21 is interrupted, and the cover is detected to be closed.

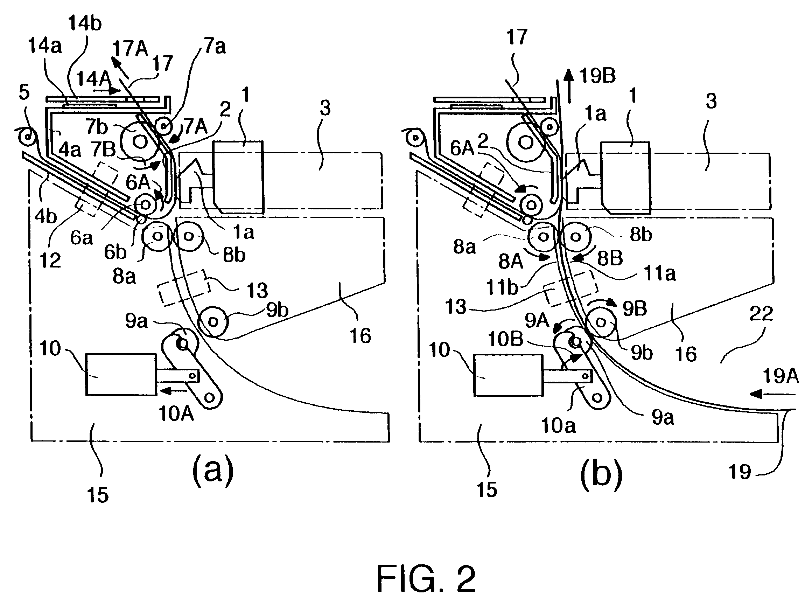

Fig. 2 is a cross section illustrating the operation of the printing apparatus of the present invention during printing to continuous and cut-sheet paper. Fig. 2 (a) shows printing to continuous paper (receipt paper in the figure); Fig. 2 (b) to cut-sheet paper (slip paper).

The wire pins (not shown in the figure) of print head 1 are provided in wire holder 1a for printing through ink ribbon 3 to receipt paper 17 against platen 2.

Receipt paper 17 is fed by transport rollers 6a and 6b past guide roller 5 and between paper guides 4a and 4b. The one transport roller 6a is connected to a motor or other drive power source (not shown in the figures).

Receipt paper detector 12 is a photo-interrupter, lever switch, or other detecting means positioned in the middle of paper guides 4a and 4b; receipt paper detector 12 is shown as a photo-interrupter in Fig. 2.

When transported by transport rollers 6a and 6b, receipt paper 17 passes between ink ribbon 3 and platen 2, through presser rollers 7a and 7b and cutter unit 14, and is fed out from the top of the printing apparatus. The cutter unit 14 comprises cutter blade 14a and cutter cover 14b; cutter blade 14a is driven in the direction of arrow 14A by a motor or other drive power source to cut receipt paper 17.

It is to be noted that while receipt paper is shown in the figure, the mechanism used for journal paper is the same except for the cutter unit. This is because journal paper is used for storing data by the store, and is not used for customer receipts.

When slip paper is printed (Fig. 2 (b)), slip paper 19 is inserted from slip paper insertion opening 22 at the front of the printing apparatus in the direction of arrow 19A. During roll paper printing, slip transport roller 9a is pulled in the direction of arrow 10A by plunger 10 as shown in Fig. 2 (a), and is thus separated from the opposing slip transport roller 9b. As a result, it is possible to insert slip paper 19. When slip paper 19 is inserted, slip paper 19 passes between slip paper guides 11a and 11b and abuts slip transport rollers 8a and 8b. Whether slip paper has been inserted is detected by slip paper detector 13. If paper has been inserted, plunger 10 is released and lever 10a moves in the direction of arrow 10B, thus pressing slip transport roller 9b against slip transport roller 9a, and holding slip paper 19 therebetween.

Slip transport rollers 8b and 9b are connected to a motor or other drive power source not shown in the figures, and slip paper 19 is transported as slip transport rollers 8b and 9b and the opposing slip transport rollers 8a and 9a rotate in the direction of arrows 8B, 9B, and 8A, 9A, respectively. When printing is completed, slip paper 19 is fed out in the direction of arrow 19B, plunger 10 is driven to separate slip transport roller 9a from slip transport roller 9b, and the next slip paper form can be inserted.

Printing on slip paper 19 is possible with receipt paper 17 loaded as shown in the figure, and if carbon-copy paper is added to slip paper 19, the same information can be simultaneously printed to both slip paper 19 and receipt paper 17.

Note that slip paper detector 13 is a photo-interrupter similar to receipt paper detector 12.

Also shown are lower case 15 and case 16 supporting the head assembly.

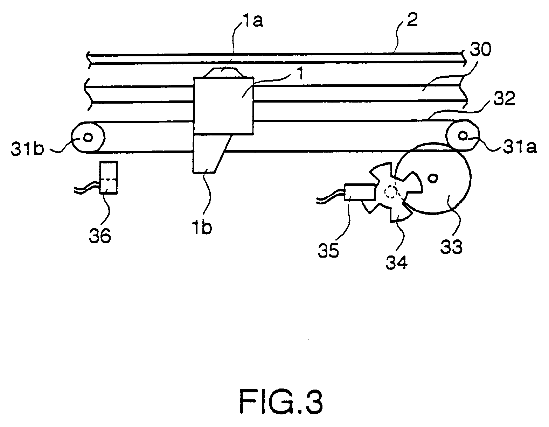

Fig. 3 is a schematic view illustrating a printing unit of the printing apparatus according to one embodiment of the invention. The printing unit comprises the print head 1 with wire holder 1a, a head carriage 1b and means for moving them.

As a method of detecting an error in the printing apparatus a method of detecting a loss of synchronism in the head carriage drive motor is described with reference to Fig. 3.

Print head 1, together with its wire holder 1a, is fixed on head carriage 1b. Head carriage 1b is driven reciprocally side to side by carriage transfer belt 32 and carriage drive gears 31a and 31b; carriage drive gear 31a is connected to a head carriage drive motor not shown in the figure. This motor is normally a pulse motor, and is a pulse motor in this embodiment. Carriage drive gear 31a drives rotating detector plate 34 via transfer gear 33. Rotating detector plate 34 is positioned so as to interrupt the detection beam of carriage detector 35, which is also a photo-interrupter. Carriage detector 35 detects the rotation of rotating detector plate 34 caused by the movement of head carriage 1b.

Note that rotating detector plate 34 is propeller-shaped, and when it rotates, the output of carriage detector 35 switches on/off on a regular period. More specifically, when head carriage 1b is driven reciprocally by the head carriage drive motor (not shown in the figure), the movement of head carriage 1b is detected by carriage detector 35.

If the receipt paper, journal paper, or slip paper between print head 1 and platen 2 is wrinkled or twisted and catches between wire holder 1a and platen 2, a paper jam occurs. As a result, head carriage 1b no longer tracks rotation of the carriage drive motor, and the carriage drive motor loses synchronization. This loss of synchronization is detected by carriage detector 35, and indicated as a "carriage error."

A "home position" for print head 1 is needed to determine a reference point for the print position. Home position detector 36 is also a photo-interrupter for detecting head carriage 1b. More specifically, when head carriage 1b moves to the left, the position at which the light beam from home position detector 36 is interrupted is the reference point for the home position.

When head carriage 1b with print head 1 moves toward the home position, home position detector 36 can detect if print head 1 does not reach the home position due to a paper jam or other factor. A home position error occurs when head carriage 1b cannot be returned to the home position.

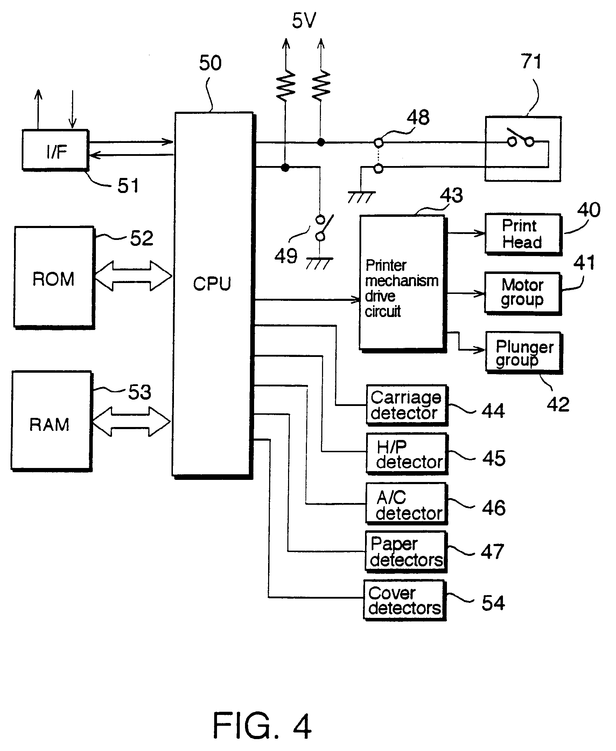

A circuit block diagram of a control circuit suitable for implementing the present invention is shown in Fig. 4.

The mechanism of the printing apparatus of the invention as described above is represented as print head 40, motor group 41, and plunger group 42 in Fig. 4; this printer mechanism is driven by printer mechanism drive circuit 43. The printer mechanism also comprises carriage detector 44, home position detector 45, automatic cutter detector 46, paper detectors 47, and cover detectors 54, each of which is connected to central processing unit (CPU) 50.

Automatic cutter detector 46 detects the position of cutter blade 14a (Fig. 2), drives the cutter blade drive motor (not shown in the figures), and generates the detector signal at a predetermined position. If a paper jam occurs in the cutter blades, the cutter blades will not move to the specified position, the detector signal will not be output, and an error is reported. This error is called a "cutter error."

Carriage errors, home position errors, and cutter errors each result in what is generally referred to as an "error state" below.

Paper detectors 47 include near-end detector 20 (Fig. 1), receipt paper detector 12 and slip paper detector 13 (Fig. 2).

Also connected to CPU 50, which controls the entire printing apparatus, are panel switch 49, which may be used for manual paper feeding, for example; interface 51 for communications with the host computer; ROM 52 for storing the control program, print character patterns, and other static information; RAM 53 providing the receive buffer, print buffer, and other data buffers; and one terminal of connector 48.

A cash drawer or other peripheral device may be connected to connector 48, and the state of the connected peripheral device can be determined by detecting the TTL level of a peripheral device state detection means 71.

When print data is input from interface 51, the data is stored to the receive buffer of RAM 53, and CPU 50 interprets the data, reads the character patterns corresponding to the data code from ROM 52, and drives print head 40, motor group 41, and plunger group 42 by means of printer mechanism drive circuit 43 to print.

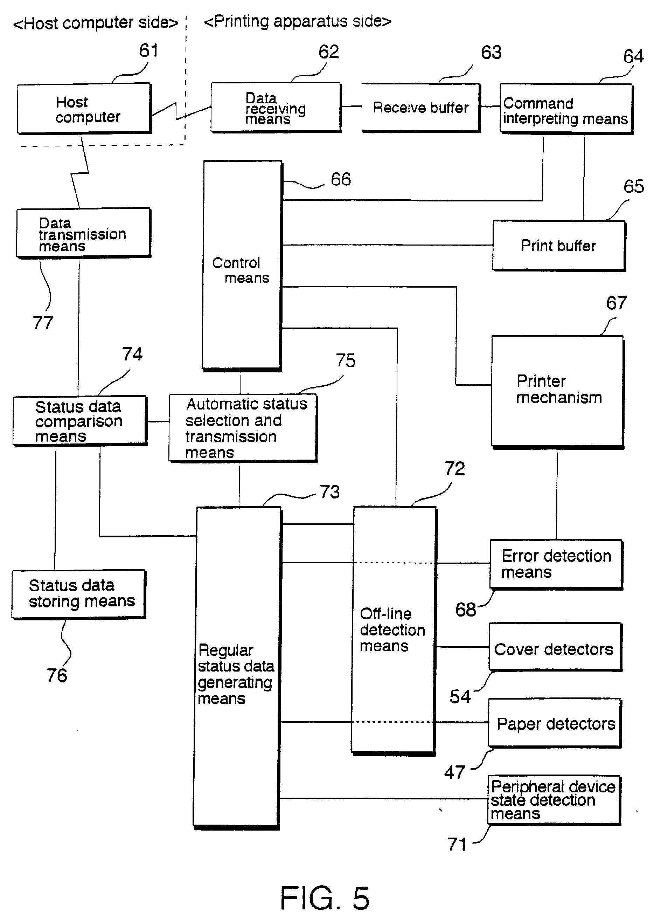

Fig. 5 is a function block diagram showing the overall mechanism of the invention, and the relationships between the various functional means.

Host computer 61 transmits the command data, print data, and other information to the printing apparatus. Data receiving means 62 receives the data from host computer 61 through the interface, and temporarily stores all received data to receive buffer 63.

The received data stored to receive buffer 63 is read one by one by command interpreting means 64, interpreted, and determined to be either print data or a control command for controlling the printing apparatus. Control commands are applied by control means 66 to execute the settings or operations corresponding to the command code. Print data is used to store the character patterns corresponding to the data codes to print buffer 65. When printing is then executed by control means 66, control means 66 reads the character pattern from print buffer 65, and drives print head 40, motor group 41, and plunger group 42 by means of drive circuit 43, shown as printer mechanism 67 in Fig. 5, to print.

If a paper jam or other error occurs during printing, paper transport, paper cutting, or other stage, the error is detected by error detection means 68. The cover detectors 54 detect if the cover is open; paper detectors 47 detect whether paper is loaded; and peripheral device state detection means 71 detects the state of any peripheral device connected to the printing apparatus.

The detection results from error detection means 68, cover detectors 54, and paper detectors 47 are sent through off-line detection means 72 to status data generating means 73. If off-line detection means 72 detects an error, cover-open, or no-paper state, it outputs information to control means 66 informing control means 66 that the printing apparatus is in a printing-disabled state, i.e., is off-line. Control means 66 thus stops printer mechanism 67, stops interpretation of the received data by the command interpreting means, and goes off-line. Off-line detection means 72 also sends the off-line state detection result to status data generating means 73.

Status data generating means 73 periodically (typically controlled by a time interrupt routine) generates new status data (in the form of one status byte in this embodiment), based on the detection results of off-line detection means 72, error detection means 68, paper detectors 47, cover detectors 54 and peripheral device state detection means 71.

Note that in this embodiment error detection means 68, cover detectors 54, paper detectors 47, peripheral device state detection means 71, and off-line detection means 72 are used as operating state detection means. Additional ones or other state detection means may be provided as the case may be.

The interface used in this embodiment is a standard RS-232C two-way, serial interface; the data length is set to 8 bits when the power is turned on. The status data is therefore also generated in an 8-bit (1 byte) data format.

The new status byte generated by status data generating means 73 is compared by comparison means 74 with the corresponding old status byte which has been stored to a status data storing means 76. As will be explained in more detail later, depending on the result of comparison, either the new status byte is sent to host computer 61 through data transmission means 77 and also stored in status data storing means 76 to update the stored old status byte, or it is not.

Automatic status selection and transmission means 75 (simply referred to as ASB means hereinafter) is controlled by control means 66 according to an ASB command received from the host computer. The ASB command designates one or more operating states for selection by ASB means 75. The selected operating state (or states) is (are) the state detected by one or more of the state detection means explained above. When a selection is made, ASB, i.e., automatic status transmission is enabled. When no operating state is selected, status data generation by status data generating means 73 is disabled and ASB is also disabled.

The content of the status byte generated by status data generating means 73 in this embodiment is shown in Table 1.

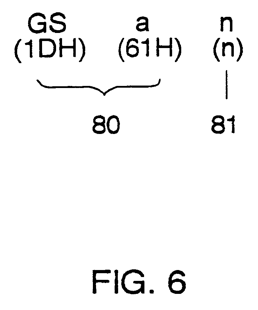

Fig. 6 shows an example of the ASB command code for selecting the one or more operating states whose change is to trigger automatic transmission of the status byte from the printing apparatus of the present embodiment to the host device. Referring to Fig. 6, [GS a] 80 indicates the type of control command comprising the combination of the [GS] code (1DH) and [a] code (61H). When this code is interpreted by the command interpreting means, it is determined to be the ASB command. The value [n] 81 is a parameter of the command, and is specifically the value used to select one or more of the operating states. The values of [n] are selected from among those shown in Table 2 in this embodiment, and the selected value is set in ASB means 75 by control means 66 as shown in Fig. 5.

The default value of [n] is OH, and no operating state is therefore selected; ASB is disabled.

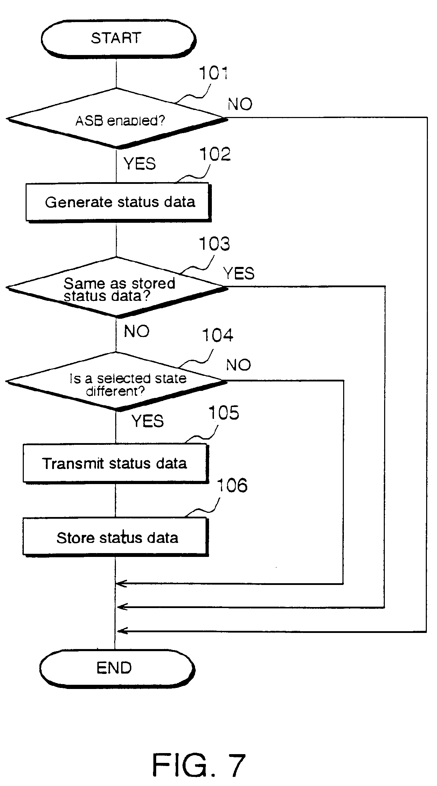

Figs. 7, 8, and 9 are flow charts illustrating the control method according to an embodiment of the present invention. Fig. 7 is the flow chart of the method of executing automatic status transmission by the printing apparatus of the invention.

Status data generating means 73 checks whether ASB is enabled or disabled as controlled by ASB means 75 (step 101). If the check reveals that ASB is enabled, generating means 73 generates the status byte in the data format shown in Table 1 based on the detection result(s) returned by error detection means 68, paper detectors 47, peripheral device state detection means 71, and/or off-line detection means 72 at that time (step 102). If ASB is disabled, the status byte is not generated and the process terminates.

The new status byte generated in step 102 is then compared by comparison means 74 with the old status byte stored in status data storing means 76 (step 103). If the generated and the stored status bytes are the same, processing is terminated because there is no change in the status. If, however, the generated and the stored status bytes are different, it is further checked whether the bit or bits that differ correspond to the status item (or items) selected by ASB means 75 in response to an ASB command (step 104). If the latter check reveals that the or all bits corresponding to any selected operating state has (have) the same value in both compared status bytes, no selected operating state has changed. In such case processing is terminated and the status data is not re-transmitted.

If any one of the one or more selected operating states has changed (the respective bits are different), however, the newly generated status byte is sent by data transmission means 77 to host computer 61 (step 105), is also stored to status data storing means 76 to update the stored old status byte (step 106), and the ASB process terminates.

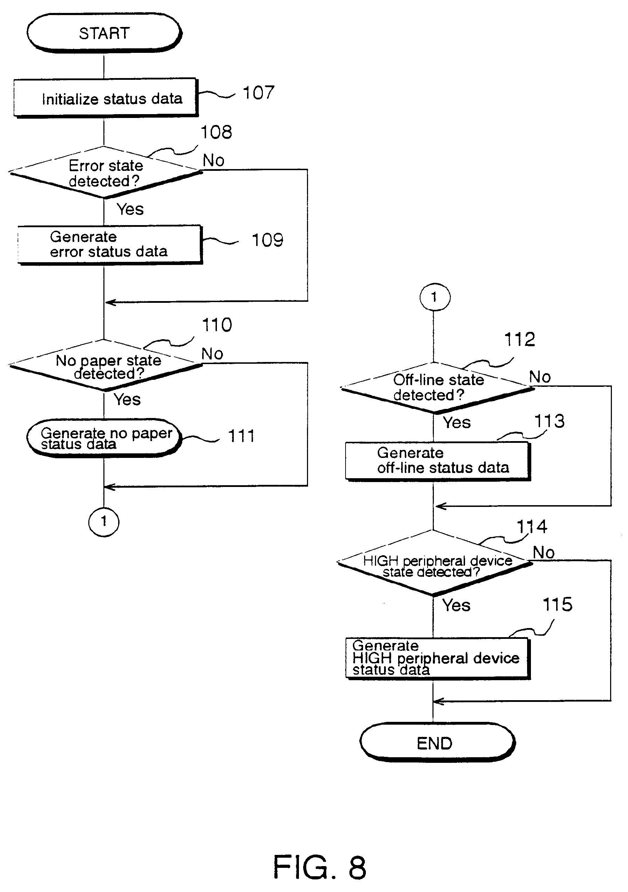

Fig. 8 is a flow chart of the execution process of status information generation (step 102) shown in Fig. 7. The status byte is initialized in the format shown in Table 1 (step 107) with a value of 30H, specifically, no errors, paper loaded, on-line, peripheral device state LOW, and the reserved bits set to the fixed values. If an error is then detected by error detection means 68 (step 108), bit 6, the error status bit, is set to '0' (step 109). If paper detection means 47 then detects that there is no paper (step 110), bit 5, the paper status bit, is set to '1' (step 111).

If off-line detection means 72 then detects an off-line state (step 112), bit 3, the on-line/off-line status bit, is set to '1' (step 113). Similarly, if peripheral device state detection means 71 detects a HIGH state (step 114), bit 2, the peripheral device status bit is set to '1' (step 115).

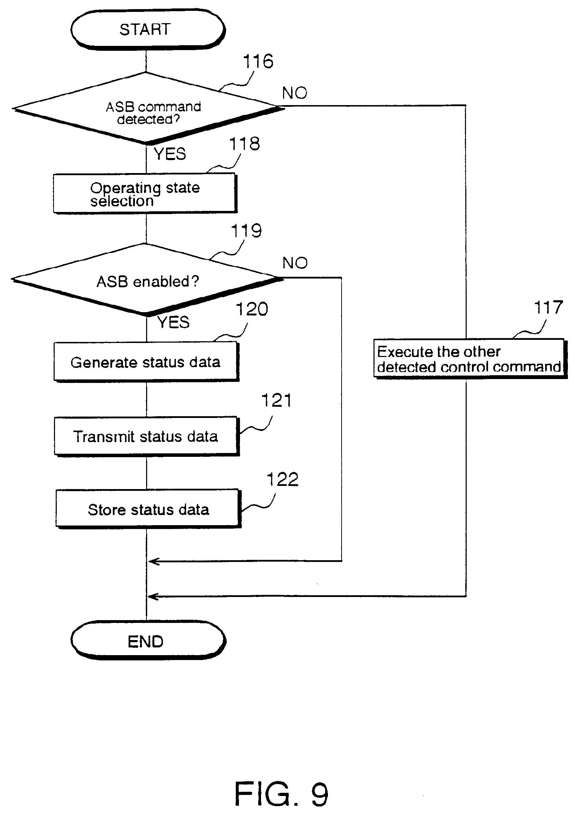

Fig. 9 is a flow chart of the ASB command execution method in a printing apparatus according to the present invention. Data transmitted from host computer 61 and received by data receiving means 62 is stored to receive buffer 63. Command interpreting means 64 reads and interprets the data from receive buffer 63, one at a time. If the interpreted command is not the ASB command (step 116), it is executed according to the command instructions; if the interpreted data is printing data, the print pattern is stored to print buffer 65 (step 117).

If the interpreted data was the ASB command (step 116), one data unit, i.e. the value representing the parameter of the ASB command, is read from receive buffer 63, and the operating state(s) to be compared for ASB transmission is selected according to Table 2. If at least one operating state is selected i.e. the value of the command parameter is greater than zero, ASB is enabled, but if no operating state is selected, ASB is disabled (step 118). If ASB is disabled (step 119), the process terminates. If ASB is enabled, status data generation by status data generating means 73 is enabled, and the status byte sent first is generated according to the procedure shown in Fig 8 (step 120).

The generated status byte is then transmitted to host computer 61 by data transmission means 77 (step 121), and is stored to status data storing means 76 (step 122). At this time, the status byte previously stored to status data storing means 76 is not compared with the transmitted status byte. Receipt of the first status byte in response to an ASB command informs the host computer 61 that ASB was changed from a disabled to an enabled state.

In the embodiment explained above the status byte is periodically generated by the status data generating means 73 and a change in one or more operating states is detected by comparison between the new status byte and the old status byte. There are alternative ways for detecting such status change. For instance, any change in the output of any one of state detection means could invoke an interrupt process. The interrupt process would check whether the state detection means that invoked the interrupt is a selected one. If so, status byte generation and transmission would be caused without requiring any comparison between old and new status bytes.

EP-A-0 652 533 (prior art according to Art. 54(3) EPC) discloses a printing apparatus adapted to generate plural bytes of status information each being individually transmitted to a host device in response to a command from the host device designating the status byte to be sent. The principles of the present invention may be applied to such printing apparatus. A preferred way of doing this will next be explained as a second embodiment of the present invention.

EP-A-0 652 533 No. 94117601.8) explains an example wherein the status information comprises six status bytes: 1. printer status byte, 2. off-line cause status byte, 3. error cause status byte, 4. continuous paper detector status byte, 5. slip paper status byte and 6. validation paper status byte (see Tables 2 to 7 in the document).

The general structure and operation of the second embodiment of the invention are the same as those of the first embodiment explained above. Therefore the following description will explain the differences only.

In response to an ASB command the ASB means 75 selects one or more operating states among the peripheral device state, the on-line/off-line state, the paper detector state and the error state, for example. Status data generating means 73 periodically generates the new status bytes based on state detection results. The new status bytes are then compared with the respective old status bytes stored in status data storing means 76. Whenever the comparison reveals that the selected operating state or any one of plural selected operating states has changed, those of the status bytes that include information related to the selected operating state(s) will be transmitted to the host device.

Table 3 shows the relationship between selectable operating states and the status bytes respectively sent to the host device. In accordance with the previous example, the selectable operating states comprise peripheral device state, on-line/off-line state, paper detector state and error state. In the Table, S means "sent" and N means "not sent". For example, when only the peripheral device state has been selected in response to an ASB command, ASB transmission will include only status byte 0 and will be triggered if and only if the status of the peripheral device changes as detected by the peripheral device state detection means 71. Similarly, when the on-line/off-line status is the only one selected, all status bytes 0 to 5 will be sent in response to each change of only the on-line/off-line status. Thus, only the minimum amount of status data necessary to provide full information regarding the selected operating state(s) is transmitted to the host. However, if, for instance, both the peripheral device state and the error state have been selected, the group comprising status bytes 0, 1 and 2 will be sent in response to each change in the peripheral device status and also in response to each change in the error state. This is because the host device does not know which of the selected operating states has changed and might not be able to identify the status byte received first if this depends on which of the selected operating states has changed.

As will be appreciated from the example explained above, the number of status bytes that will be sent in an ASB transmission differs depending on which operating state or which combination of operating states has been selected in response to an ASB command. Whenever plural bytes are sent, they are sent in a predetermined order, for instance the order of the numbering shown in Table 3, so that they may be correctly identified by the host device.

In the above embodiments of the invention ASB is enabled and disabled by means of an ASB command sent from the host device. It is possible, however, (although not shown in the drawings) to provide means, such as switch means, for instance a DIP switch, in the printing apparatus itself for allowing a user to manually set ASB ON or OFF. Setting ASB ON may either include selection of all available operating states or only particular ones. In such case the configuration is preferably such that a manual setting of the ASB may be overrun by an ASB command. In particular applications it may even be possible to omit any means for setting ASB ON or OFF and/or for selecting particular operating states. In such case status information representing one or more predetermined operating states would automatically be sent to the host device whenever and only when a change in any of the states occurs. Although more information may be sent to the host device than required it would still be less than in the prior art. It is up to the host device whether or not to process such data that are automatically offered by the printing apparatus.

**Table 1**

| Bit | Function | Value | |
|---|---|---|---|
| | | 0 | 1 |
| 0 | Reserved | Fixed to 0 | |
| 1 | Reserved | Fixed to 0 | |
| 2 | Peripheral Device state | LOW | HIGH |
| 3 | On-line/off-line state | on-line | off-line |
| 4 | Reserved | Fixed to 1 | |
| 5 | Paper detector state | no paper | paper loaded |
| 6 | Error detector state | no error | error detected |
| 7 | Reserved | Fixed to 0 | |

**Table 2**

| Bit | Function | Value | |
|---|---|---|---|
| | | 0 | 1 |
| 0 | Undefined | | |
| 1 | Undefined | | |
| 2 | Peripheral device state | disable | enable |
| 3 | On-line/off-line state | disable | enable |
| 4 | Undefined | | |
| 5 | Paper detector state | disable | enable |
| 6 | Error detector state | disable | enable |
| 7 | Undefined | | |

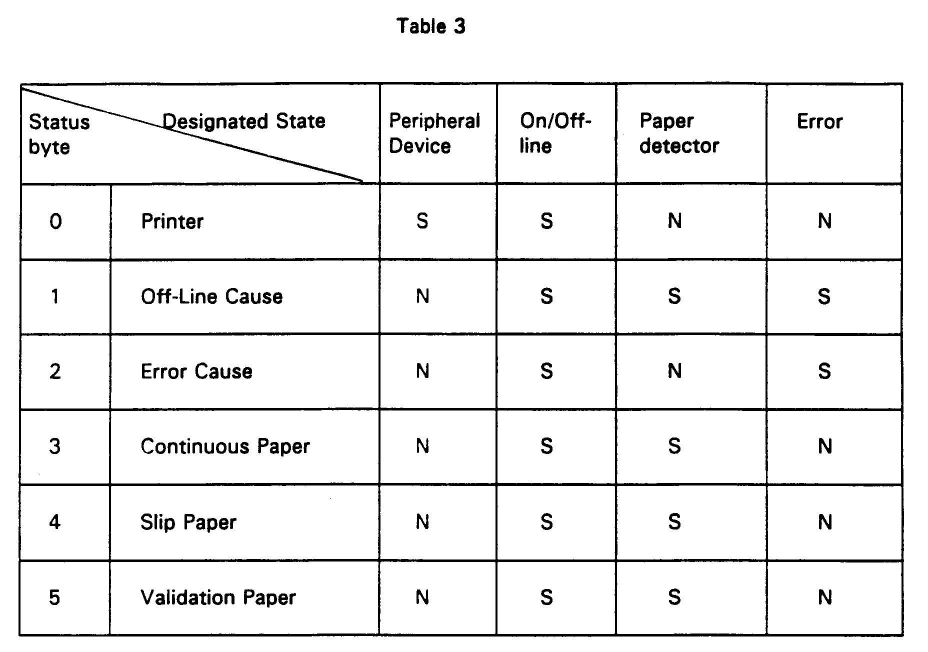

## Claims

1. A printing apparatus which is adapted to be connected to a host device (61) and has an operating state detection and transmission means for detecting at least one operating state of the printing apparatus and transmitting status information representing said at least one operating state to the host device, wherein
said operating state detection and transmission means comprises:
state detection means (47, 54, 68, 71, 72) for detecting said operating state;
state change detection means (74, 76) for detecting a change in the output of the state detection means; and
status transmission means (77) responsive to said state change detection means (74, 76) for transmitting said status information upon each change in the output of the state detection means, and
the printing apparatus further comprises:
command receiving means (62-64) for receiving, interpreting and executing a control command sent from the host device (61) and enabling/disabling means (66, 73, 75) responsive to said command receiving means for bringing said operating state detection and transmission means into either a first condition enabling said status information transmission or a second condition disabling said status information transmission,
**characterized in that** said status transmission means (77) is adapted to transmit said status information in response to said enabling/disabling means (66, 73, 75) bringing said operating state detection and transmission means into said first condition.

2. The apparatus according to claim 1 wherein the state change detection means comprises:
status storing means (76) for storing the status information transmitted to the host device; and
state comparing means (74) for comparing previously stored status information with the state currently detected by the state detection means.

3. The apparatus according to claim 1 or 2, wherein:
a plurality of state detection means (47, 54, 68, 71, 72) corresponding to the number of operating states to be detected is provided, and
the state change detection means (74, 76) is adapted to detect a change in the output of each of these state detection means;
wherein said status information is transmitted in response to each change in the output of any one of the state detection means.

4. The apparatus according to claim 3, wherein said enabling/disabling means (62-64, 66, 73, 75) comprises selection means (75) for selecting one or more of said state detection means (47, 54, 68, 71, 72), wherein said status information is transmitted only in response to a change in the output of a selected state detection means.

5. The apparatus according to claim 4 wherein said status information includes status data representing at least the operating state or operating states detected by the selected one or more state detection means.

6. The apparatus according to claim 4 or 5 wherein:
said plurality of state detection means (47, 54, 68, 71, 72) are grouped into one or more groups of state detection means; and
said status information includes at least status data representing the operating states detected by the state detection means which are part of a group that includes a selected state detection means.

7. A printing apparatus according to claim 6 wherein:
one group of state detection means includes at least state detection means (68) for detecting abnormal printing apparatus states, state detection means (47) for detecting presence or absence of print media, and detection means (72) for detecting whether the printing apparatus is or is not ready to receive data from the host device.

8. A control method in a printing apparatus for transmitting operating status information to a host device, said control method comprising the steps:
(a) detecting an operating state of the printing apparatus;
(b) detecting a change in said operating state;
(c) transmitting, in response to a change detected in step (b), operating status information including status data representing the operating state detected in step (a);
(d) repeating steps (a) to (c);
(e) receiving and interpreting a control command from the host device; and
(f) enabling or disabling status information transmission to the host device in accordance with the control command, wherein at least step (c) is performed only when status information transmission is enabled,
**characterized by** the step of
(g) transmitting said operating status information in response to a control command enabling said status information transmission.

9. The method according to claim 8 wherein step (b) comprises:
(b1) storing the last status information transmitted to the host device; and
(b2) comparing the stored status information with the state detected in step (a).

10. The method according to claim 8 or 9 wherein:
step (a) comprises detecting a plurality of operating states of the printing apparatus;
step (b) comprises detecting a change in each of the operating states detected in step (a); and
step (c) comprises transmitting said operating status information in response to a any change detected in step (b).

11. The method according to claim 10 wherein
step (f) comprises enabling status information transmission by selecting one or more of said operating states; and
step (c) comprises transmitting said operating status information in response to a any change in a selected one of the operating states detected in step (a).

12. The method according to claim 10 or 11 wherein step (a) comprises grouping said plurality of operating states into one or more groups, and wherein said status information includes at least status data representing those of the operating states detected in step (a) which are part of a group that includes a selected operating state.

## Patentansprüche

1. Druckgerät, das an eine Host-Vorrichtung (61) anschließbar ist und eine Betriebszustandserfassungs- und -übermittlungsanordnung zum Erfassen zumindest eines Betriebszustands des Druckgeräts und zum Übermitteln von zumindest einen Betriebszustand repräsentierender Statusinformation an die Host-Vorrichtung aufweist, bei dem
die Betriebszustandserfassungs- und -übermittlungsanordnung umfaßt:
eine Zustandserfassungsanordnung (47, 54, 68, 71, 72) zum Erfassen des Betriebszustands;
eine Zustandsänderungserfassungsanordnung (74, 76) zum Erfassen einer Änderung im Ausgangssignal der Zustandserfassungsanordnung; und
eine auf die Zustandsänderungserfassungsanordnung (74, 76) ansprechende Statusübermittlungsanordnung (77) zum Übermitteln der Statusinformation bei jeder Änderung im Ausgangssignal der Zustandserfassungsanordnung, und
das Druckgerät ferner umfaßt:
eine Befehlsempfangsanordnung (62-64) zum Empfangen, Interpretieren und Ausführen eines von der Host-Vorrichtung (61) gesendeten Steuerbefehls und eine auf die Befehlsempfangsanordnung ansprechende Freigabe/Sperranordnung (66, 73, 75) zum Versetzen der Betriebszustandserfassungs- und -übermittlungsanordnung entweder in einen ersten Arbeitszustand, in dem die Statusinformationsübermittlung freigegeben ist, oder einen zweiten Arbeitszustand, in dem die Statusinformationsübermittlung gesperrt ist,
**dadurch gekennzeichnet**, daß die Statusübermittlungsanordnung (77) so ausgebildet ist, daß sie die Statusinformation als Antwort auf die Freigabe/Sperranordnung (66, 73, 75) übermittelt, welche die Betriebszustandserfassungs- und -übermittlungsanordnung in den ersten Arbeitszustand versetzt.

2. Gerät nach Anspruch 1, bei dem die Zustandsänderungserfassungsanordnung umfaßt:
eine Statusspeicheranordnung (76) zum Speichern der an die Host-Vorrichtung übermittelten Statusinformation; und
eine Zustandsvergleichsanordnung (74) zum Vergleichen zuvor gespeicherter Statusinformation mit dem von der Zustandserfassungsanordnung aktuell erfaßten Zustand.

3. Gerät nach Anspruch 1 oder 2, bei dem:
eine Mehrzahl von Zustandserfassungsanordnungen (47, 54, 68, 71, 72) entsprechend der Anzahl an zu erfassenden Betriebszuständen vorgesehen ist, und
die Zustandsänderungserfassungsanordnung (74, 76) so ausgebildet ist, daß sie eine Änderung im Ausgangssignal jeder dieser Zustandserfassungsanordnungen erfaßt;
wobei die Statusinformation als Antwort auf jede Änderung im Ausgangssignal irgendeiner der Zustandserfassungsanordnungen übermittelt wird.

4. Gerät nach Anspruch 3, bei dem die Freigabe/Sperranordnung (62-64, 66, 73, 75) eine Auswahlanordnung (75) zum Auswählen einer oder mehrerer der Zustandserfassungsanordnungen (47, 54, 68, 71, 72) umfaßt, wobei die Statusinformation nur in Antwort auf eine Änderung im Ausgangssignal einer ausgewählten Zustandserfassungsanordnung übermittelt wird.

5. Gerät nach Anspruch 4, bei dem die Statusinformation Statusdaten umfaßt, die zumindest den Betriebszustand oder die Betriebszustände repräsentieren, der bzw. die von der einen oder den mehreren ausgewählten Zustandserfassungsanordnungen erfaßt wurde/wurden.

6. Gerät nach Anspruch 4 oder 5, bei dem:
die Mehrzahl von Zustandserfassungsanordnungen (47, 54, 68, 71, 72) in eine oder mehrere Gruppen von Zustandserfassungsanordnungen gruppiert ist; und
die Statusinformation zumindest Statusdaten umfaßt, welche die Betriebszustände repräsentieren, die von den Zustandserfassungsanordnungen erfaßt wurden, die Teil einer Gruppe sind, die eine ausgewählte Zustandserfassungsanordnung enthält.

7. Druckgerät nach Anspruch 6, bei dem:
eine Gruppe von Zustandserfassungsanordnungen zumindest eine Zustandserfassungsanordnung (68) zum Erfassen anormaler Druckgerätezustände, eine Zustandserfassungsanordnung (47) zum Erfassen der Anwesenheit oder Abwesenheit von Druckmedien und eine Erfassungsanordnung (72) zum Erfassen, ob das Druckgerät zum Empfang von Daten von der Host-Vorrichtung bereit ist oder nicht, enthält.

8. Steuerverfahren in einem Druckgerät zum Übermitteln von Betriebsstatusinformation an eine Host-Vorrichtung, wobei das Steuerverfahren folgende Schritte umfaßt:
(a) Erfassen eines Betriebszustands des Druckgeräts;
(b) Erfassen einer Änderung in dem Betriebszustand;
(c) Übermitteln, als Antwort auf eine in Schritt (b) erfaßte Änderung, von Betriebsstatusinformation, die Statusdaten enthält, die den in Schritt (a) erfaßten Betriebszustand repräsentieren;
(d) Wiederholen der Schritte (a) bis (c);
(e) Empfangen und Interpretieren eines Steuerbefehls von der Host-Vorrichtung; und
(f) Freigeben oder Sperren der Statusinformationsübermittlung an die Host-Vorrichtung nach Maßgabe des Steuerbefehls, wobei zumindest Schritt (c) nur ausgeführt wird, wenn die Statusinformationsübermittlung freigegeben ist,
**gekennzeichnet durch** den Schritt des
(g) Übermittelns der Betriebsstatusinformation als Antwort auf einen Steuerbefehl, der die Statusinformationsübermittlung freigibt.

9. Verfahren nach Anspruch 8, bei dem Schritt (b) umfaßt:
(b1) Speichern der an die Host-Vorrichtung übermittelten letzten Statusinformation; und
(b2) Vergleichen der gespeicherten Statusinformation mit dem im Schritt (a) erfaßten Zustand.

10. Verfahren nach Anspruch 8 oder 9, bei dem:
Schritt (a) das Erfassen einer Mehrzahl von Betriebszuständen des Druckgeräts umfaßt;
Schritt (b) das Erfassen einer Änderung in jedem der in Schritt (a) erfaßten Betriebszustände umfaßt; und
Schritt (c) das Übermitteln der Betriebsstatusinformation als Antwort auf jegliche in Schritt (b) erfaßte Änderung umfaßt.

11. Verfahren nach Anspruch 10, bei dem
Schritt (f) das Freigeben der Statusinformationsübermittlung durch Auswählen eines oder mehrerer der Betriebszustände umfaßt; und
Schritt (c) die Übermittlung der Betriebsstatusinformation als Antwort auf jegliche Änderung in einem ausgewählten der in Schritt (a) erfaßten Betriebszustände umfaßt.

12. Verfahren nach Anspruch 10 oder 11, bei dem Schritt (a) das Gruppieren der Mehrzahl von Betriebszuständen in eine oder mehrere Gruppen umfaßt, und bei dem die Statusinformation zumindest Statusdaten enthält, die jene der in Schritt (a) erfaßten Betriebszustände repräsentieren, die Teil einer Gruppe sind, die einen ausgewählten Betriebszustand enthält.

## Revendications

1. Dispositif d'impression qui est conçu pour être connecté à un dispositif (61) hôte et qui a des moyens de transmission et de détection d'état de fonctionnement destinés à détecter au moins un état de fonctionnement du dispositif d'impression et à transmettre des informations d'état représentant ledit au moins un état de fonctionnement au dispositif hôte, dans lequel
les moyens de transmission et de détection d'état de fonctionnement comportent :
des moyens (47, 54, 68, 71, 72) de détection d'état destinés à détecter l'état de fonctionnement ;
des moyens (74, 76) de détection de modification d'état destinés à détecter une modification de la sortie des moyens de détection d'état ; et
des moyens (77) de transmission d'état sensibles aux moyens (74, 76) de détection de modification d'état en transmettant l'information d'état lors de chaque changement de la sortie des moyens de détection d'état, et
le dispositif d'impression comporte en outre :
des moyens (62-64) de réception d'instruction, destinés à recevoir, interpréter et exécuter une instruction de commande envoyée par le dispositif (61) hôte et des moyens (66, 73, 75) d'activation/désactivation, sensibles aux moyens de réception d'instruction, destinés à amener les moyens de transmission et de détection d'état de fonctionnement soit en un premier état activant la transmission d'information d'état, soit en un second état désactivant la transmission d'information d'état,
caractérisé en ce que les moyens (77) de transmission d'état sont conçus pour transmettre l'information d'état en réponse aux moyens (66, 73, 75) d'activation/désactivation qui amènent les moyens de transmission et de détection d'état de fonctionnement en le premier état.

2. Dispositif suivant la revendication 1, dans lequel les moyens de détection de modification d'état comportent :
des moyens (76) de mémorisation d'état destinés à mémoriser l'information d'état transmise au dispositif hôte ; et
des moyens (74) de comparaison d'état destinés à comparer des informations d'état mémorisées précédemment avec l'état courant détecté par les moyens de détection d'état.

3. Dispositif suivant la revendication 1 ou 2, dans lequel :
une pluralité de moyens (47, 54, 68, 71, 72) de détection d'état correspondant au nombre d'états de fonctionnement à détecter sont prévus, et
les moyens (74, 76) de détection de modification d'état sont conçus pour détecter les modifications de la sortie de chacun de ces moyens de détection d'état ;
dans lequel les informations d'état sont transmises en réponse à chaque modification de la sortie de l'un quelconque des moyens de détection d'état.

4. Dispositif suivant la revendication 3, dans lequel les moyens (62-64, 66, 73, 75) d'activation/désactivation comportent des moyens (75) de sélection destinés à sélectionner un ou plusieurs des moyens (47, 54, 68, 71, 72) de détection d'état, des informations d'état étant transmises uniquement en réponse à une modification de la sortie d'un des moyens de détection d'état sélectionnés.

5. Dispositif suivant la revendication 4, dans lequel les informations d'état comportent des données d'état représentant au moins un état de fonctionnement ou des états de fonctionnement détectés par les moyens de détection d'état sélectionnés ou par plusieurs des moyens de détection d'état sélectionnés.

6. Dispositif suivant la revendication 4 ou 5, dans lequel :
la pluralité de moyens (47, 54, 68, 71, 72) de détection d'état sont groupés en un ou plusieurs groupes de moyens de détection d'état ; et
les informations d'état incluent au moins des données d'état représentant les états de fonctionnement détectés par les moyens de détection d'état qui font partie d'un groupe qui inclut un des moyens de détection d'état sélectionnés.

7. Dispositif d'impression suivant la revendication 6, dans lequel :
un groupe des moyens de détection d'état inclut au moins des moyens (68) de détection d'état destinés à détecter des états de dispositif d'impression anormaux, des moyens (47) de détection d'état destinés à détecter la présence ou l'absence de supports d'impression, et des moyens (72) de détection destinés à détecter si le dispositif d'impression est ou n'est pas prêt à recevoir des données du dispositif hôte.

8. Procédé de commande dans un dispositif d'impression pour transmettre des informations d'état de fonctionnement à un dispositif hôte, le procédé de commande comprenant les étapes qui consistent à :
(a) détecter un état de fonctionnement du dispositif d'impression ;
(b) détecter les modifications de l'état de fonctionnement ;
(c) transmettre en réponse à une modification détectée à l'étape (b), les informations d'état de fonctionnement incluant des données d'état représentant l'état de fonctionnement détecté à l'étape (a) ;
(d) répéter les étapes (a) à (c),
(e) recevoir et interpréter une instruction de commande provenant du dispositif hôte ; et
(f) activer et désactiver la transmission d'informations d'état vers le dispositif hôte conformément à l'instruction de commande, dans lequel au moins l'étape (c) est effectuée uniquement lorsque la transmission d'informations d'état est activée, caractérisé par l'étape qui consiste à :
(g) transmettre l'information d'état de fonctionnement en réponse à une instruction de commande activant la transmission d'information d'état.

9. Procédé suivant la revendication 8, dans lequel l'étape (b) comporte :
(b1) le fait de mémoriser la dernière information d'état transmise au dispositif hôte ; et
(b2) le fait de comparer l'information d'état mémorisée avec l'état détecté à l'étape (a).

10. Procédé suivant la revendication 8 ou 9, dans lequel :
l'étape (a) comporte le fait de détecter une pluralité d'états de fonctionnement du dispositif d'impression ;
l'étape (b) comporte le fait de détecter une modification dans chacun des états de fonctionnement détectés à l'étape (a) ; et
l'étape (c) comporte le fait de transmettre les informations d'état de fonctionnement en réponse à une modification quelconque détectée à l'étape (b).

11. Procédé suivant la revendication 10, dans lequel
l'étape (f) comporte le fait d'activer la transmission d'information d'état en sélectionnant un ou plusieurs des états de fonctionnement ; et
l'étape (c) comporte le fait de transmettre l'information d'état de fonctionnement en réponse à n'importe quelle modification dans l'un sélectionné des états de fonctionnement détectés à l'étape (a).

12. Procédé suivant la revendication 10 ou 11, dans lequel l'étape (a) comprend le fait de grouper la pluralité d'états de fonctionnement en un ou plusieurs groupes, et dans lequel l'information d'état inclut au moins des données d'état représentant ceux des états de fonctionnement détectés à l'étape (a) qui font partie d'un groupe qui inclut un état de fonctionnement sélectionné.
